# EUROPEAN PATENT SPECIFICATION

(11) **EP 3 968 170 B1**
(45) Date of publication and mention of the grant of the patent: **22.10.2025**
(21) Application number: 20815545.7
(22) Date of filing: 22.05.2020
(51) Int. Cl.: H04L 67/08, G06F 13/42, H04L 67/133, H04L 69/324, G06F 13/38

(54) **SMART DEVICE MANAGEMENT METHOD AND APPARATUS, NETWORK DEVICE, AND READABLE STORAGE MEDIUM**
VERFAHREN UND GERÄT ZUR VERWALTUNG EINER INTELLIGENTEN VORRICHTUNG, NETZWERKVORRICHTUNG UND LESBARES SPEICHERMEDIUM
PROCÉDÉ ET APPAREIL DE GESTION DE DISPOSITIF INTELLIGENT, DISPOSITIF RÉSEAU ET SUPPORT DE STOCKAGE LISIBLE

(30) Priority: 29.05.2019 CN 201910458834
(43) Date of publication of application: 16.03.2022
(73) Proprietor: ZTE Corporation, Shenzhen Guangdong 518057 (CN)
(72) Inventor: LI, Jun, Shenzhen, Guangdong 518057 (CN)
(74) Representative: WBH Wachenhausen Patentanwälte PartG mbB
(86) International application number: PCT/CN2020/091863
(87) International publication number: WO 2020/238801

(56) References cited:
- EP-A1- 3 255 527
- CN-A- 107 070 726
- CN-A- 109 117 402
- US-A1- 2009 019 278
- US-A1- 2013 332 605
- US-A1- 2013 332 605
- US-A1- 2014 090 051
- US-A1- 2016 378 509
- US-A1- 2016 378 509
- US-A1- 2018 293 197

## Description

### TECHNICAL FIELD

Embodiments of the present disclosure relate to, but are not limited to the field of communication, and for example, relate to, but are not limited to a method and an apparatus for smart device management, a network device, and a computer-readable storage medium.

### BACKGROUND

Management Component Transport Protocol (MCTP) is a "data link layer" protocol based on a physical layer, which is independent of the communication between smart devices in computers of various media, which is convenient for platform management developers to quickly and economically develop and deploy platform management subsystems accessible by a Common Information Model (CIM). MCTP defines a transport layer protocol independent of physical media, and the link layer is defined in a series of MCTP binding protocols. The supported physical media types include: Peripheral Component Interconnect Express (PCIe), System Management Bus (SMBus), Universal Serial Bus (USB), Block Transfer (BT), Keyboard Controller Style (KCS), and the like.

The media types supported by most smart devices with computer systems supporting MCTP out-of-band management are PCIe and SMBus. A Management Component Transport Protocol Over Peripheral Component Interconnect Express Vendor Defined Message (MCTP Over PCIe VDM) transport binding specification defines a communication protocol between PCIe link based smart devices on the basis of a PCIe transport layer protocol. A Management Component Transfer Protocol Over System Management Bus (MCTP Over SMBus) transport binding specification defines a communication protocol between Inter-Integrated Circuit (I2C) link based smart devices on the basis of a (System Management Bus (SMBus) protocol, or the like. MCTP basic specifications define a communication mechanism between smart devices supporting different physical layer links.

A computer system equipped with a Baseboard Management Controller (BMC) communicates with a managed device via a physical channel such as out-of-band PCIe and SMBus by the BMC, and is responsible for hardware monitoring of the computer system.

A plurality of MCTP binding protocols defined by a Distributed Management Task Force (DMTF) and the MCTP basic specification together ensure that out-of-band communication can be implemented by smart devices of different manufacturers.

Generally, devices that support MCTP are all smart devices with processing units and firmware thereof. When out-of-band functions provided by the smart devices exceed the defined functions, such as the smart devices with switching functions providing switching configuration functions and debugging of smart devices, because there is no standard protocol definition, each smart device implements these functions according to manufacturer's implementation, and the BMC can't directly provide support, and when the smart devices are upgraded, the BMC also needs to be upgraded to support new functions. Similarly, external management software connected to the BMC can't manage the smart devices, or the smart devices can't be managed after adding new functions.

US20160378509A1 relates to a method including during boot of an information handling system, obtaining from a management controller integral to the information handling system information regarding resource requirements for one or more peripheral devices communicatively coupled to the one or more processor sockets integral to the information handling system and the management controller. The method may also include determining whether a default allocation of resources for the one or more peripheral devices among the one or more processor sockets by a basic input/output system integral to the information handling system satisfies the resource requirements. The method may further include, in response to determining the default allocation does not satisfy the resource requirements, rebalancing resources among the one or more processor sockets to satisfy the resource requirements prior to enumeration of the one or more peripheral devices.

US20180293197A1 relates to a method and information handling system including a first universal serial bus (USB) type C port for transceiving SMBus data multiplexed over unused USB-2 pins from a host information handling system, a first multiplexer for demultiplexing the SMBus as a designated data bus to a second multiplexer to create a designated bus for management controller transport protocol data, the second multiplexer re-multiplexing the SMBus designated bus to a second USB type C port for connection with an out-of-band management hardware system network interface card of a device connected to the second USB type C port for communication of management controller transport protocol data with the information handling system host and bypassing a docking station high capacity connector multiplex controller, and an embedded controller for activating the first multiplexer and the second multiplexer upon detecting the connection with the out-of-band management hardware system network interface card via the second USB type C port and establishing the designated data bus for management controller transport protocol data bypass connection.

US20130332605A1 relates to a network interface device (NID) or management access point of a system, configured to: receive requests to register one or more additional capabilities provided by a second intelligent device integrated into the system; in response to the request, register the additional capabilities within a capabilities listing; advertise the additional capabilities as being an available within the system; and respond to a request from an external requestor for access to one of the additional capabilities by forwarding the management protocol and payload to the second intelligent device to enable the second intelligent device to perform all substantive processing required for the request. The NID establishes and maintains a network session between the second intelligent device and any external requestor requesting access to the additional capabilities. In response to receiving a response from the second intelligent device, the NID packages the response and forwards the response to the external requestor.

EP3255527A1 relates to technologies for remote keyboard-video-mouse sessions including failover mechanisms. In some embodiments, a system can establish a first remote keyboard-video-mouse session between a console application on the system and a first server application executed by a controller on a server. The first remote keyboard-video-mouse session can be established via a first network connection between the system and the controller. Next, the system can detect an error associated with the first remote keyboard-video-mouse session. In response to the error, the system can establish a second remote keyboard-video-mouse session between the console application and a second server application executed by an operating or a basic input/output program on the server. The second remote keyboard-video-mouse session can be established via a second network connection between the system and the second server application.

### SUMMARY

The invention is set out in the appended set of claims.

A method and an apparatus for smart device management, a network device and a computer-readable storage medium provided by the embodiments of the present disclosure mainly solve the problems of inconvenient out-of-band management and poor universality of the smart device.

According to an embodiment of the present disclosure provided is a method for smart device management. The method for smart device management includes virtualizing a console for a smart device, and performing at least one of input and output of a console message with external management by means of a Management Component Transfer Protocol (MCTP) out-of-band channel, performing at least one of input and output of a console message with external management by means of a MCTP out-of-band channel includes: performing communication connection between a Baseboard Management Controller (BMC) and the smart device and external management software, wherein the BMC serves as a MCTP message communication agent; and performing, by the external management software, at least one of input and output of the console message; wherein virtualizing a console for a smart device comprises:determining the smart device in the system, through a BMC scanning system; andvirtualizing the console for the smart device, through the BMC.

According to another embodiment of the present disclosure further provided is an apparatus for smart device management. the apparatus for smart device management includes a console establishing module configured for virtualizing a console for a smart device, and an interactive management module configured to perform input and/or output of a console message with external management by means of a Management Component Transfer Protocol (MCTP) out-of-band channel, performing at least one of input and output of a console message with external management by means of a MCTP out-of-band channel includes: performing communication connection between a Baseboard Management Controller (BMC) and the smart device and external management software respectively, wherein the BMC serves as a MCTP message communication agent; and performing, by the external management software, at least one of input and output of the console message; wherein virtualizing a console for a smart device comprises:determining the smart device in the system, through a BMC scanning system; andvirtualizing the console for the smart device, through the BMC.

According to another embodiment of the present disclosure further provided is a network device, including a processor, a memory and a communication bus. The communication bus is configured for implementing connection communication between the processor and the memory; and the processor is configured to execute one or more computer programs stored in the memory to implement the method for smart device management mentioned above.

According to an embodiment of the present disclosure further provided is a computer storage medium. The computer-readable storage medium stores one or more programs, and the one or more programs are executable by one or more processors to implement the method for smart device management mentioned above.

### BRIEF DESCRIPTION OF DRAWINGS

FIG. 1 is a schematic flowchart of a method for smart device management provided by Embodiment I of the present disclosure;
FIG. 2 is a schematic diagram of BMC communication provided by Embodiment I of the present disclosure;
FIG. 3 is a system architecture diagram of a method for smart device management provided by Embodiment II of the present disclosure;
FIG. 4 is a schematic flowchart of the method for smart device management provided by Embodiment Two of the present disclosure;
FIG. 5 is a system architecture diagram of a method for smart device management provided by Embodiment III of the present disclosure;
FIG. 6 is a flowchart of the method for smart device management provided by Embodiment III of the present disclosure;
FIG. 7 is a schematic diagram of an apparatus for smart device management provided by Embodiment VI of the present disclosure; and
FIG. 8 is a schematic diagram of a network device provided by Embodiment V of the present disclosure.

### DETAILED DESCRIPTION

The embodiments of the present disclosure will be further described hereinafter in detail by means of multiple embodiments with reference to the accompanying drawings. It should be understood that the embodiments described herein are merely illustrative of the present disclosure and are not intended to limit the present disclosure.

### Embodiment I:

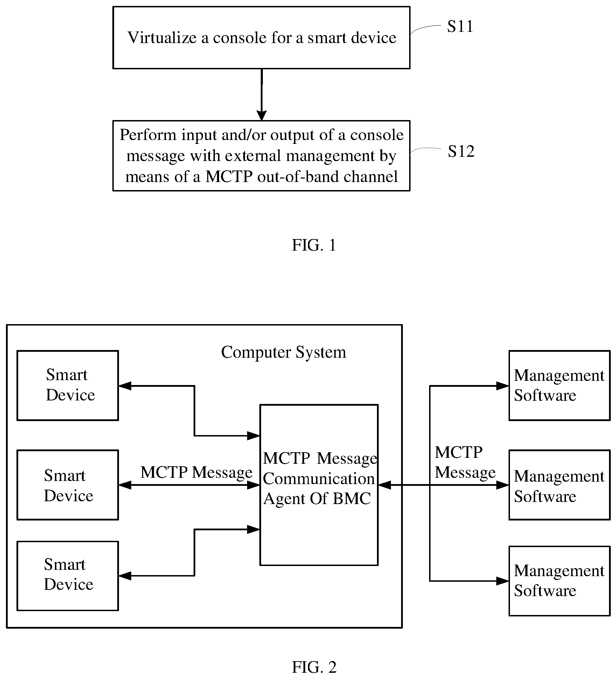

This embodiment provides a method for smart device management. With reference to FIG. 1, the method includes the following steps.

At S11, a console is virtualized for a smart device.

At S12, input and/or output of a console message is performed with external management by means of a Management Component Transfer Protocol MCTP out-of-band channel.

The smart device can realize a plurality of functions on the console thereof, and the console of the smart device is connected to a BMC or external management software, and a command provided by the console is used to manage and maintain the smart device.

In some embodiments, virtualizing a console for a smart device may include: defining at least one type value in a reserved type field of a Platform-Level Data Model PLDM as a PLDM for the console; or, in a MCTP defined message, defining a console function message body. Optionally, a type value such as 100000b in the reserved type field of the Platform-Level Data Model PLDM may be defined as the PLDM for the console, or the console function message body is defined in a Management Component Transport Protocol Vendor defined - Peripheral Component Interconnect/ Management Component Transport Protocol Vendor defined - Internet Assigned Numbers Authority (MCTP Vendor defined - PCI/MCTP Vendor defined - IANA) message.

In some embodiments, performing input and/or output of a console message with external management by means of a MCTP out-of-band channel may include: with a Baseboard Management Controller (BMC) serving as a MCTP message communication agent, performing communication connection between the BMC and the smart device and external management software respectively. The BMC serves as the MCTP message communication agent, allowing the external management software and the smart device to complete the interaction of the console message. As shown in FIG. 2, the BMC can communicate with a plurality of smart devices at the same time, or allow multiple external management software to access at the same time. The external management software performs input and/or output of the console message, and provides the console of the smart device for users. With this solution, the BMC firmware and the external management software can support the debugging, maintenance and management of smart devices with a console function from all manufacturers; it is not necessary to upgrade the BMC firmware and the external management software for adding a new smart device; and the users can operate all functions of the smart device through the console provided by the external management software. The decoupling of the BMC and the external management software from the smart device is realized, and it is not necessary to upgrade the BMC firmware and the external management software to add a new smart device or add a new function for the smart device.

In some embodiments, performing input and/or output of a console message with external management by means of a MCTP out-of-band channel may further include: implementing, by the BMC, a console operation interface of the smart device; and accessing the console and/or a Command-Line Interface (CLI) of the smart device through the console operation interface of the BMC to perform input and/or output of the console message. With this solution, special external management software is no longer required, and instead common terminal tools, such as serial terminal tools, SSH/Telnet client tools and Serial Over Lan SOL) function of Intelligent Platform Management Interface Tool (ipmitool), are used to debug, maintain and manage the smart devices in the computer system, and the BMC firmware upgrade is not necessary for adding a new smart device or for functional upgrading of the smart device.

The console operation interface of the BMC may include at least one selected from a group consisting of a Serial Over Lan SOL, a serial port, a Secure Shell Protocol (SSH) and a remote terminal protocol Telnet.

Some embodiments may further include: accessing the console and/or the Command-Line Interface CLI of the smart device through the console operation interface of the BMC to perform input and/or output of the console message, and perform at least one of debugging, maintenance and management on the smart device.

In some embodiments, virtualizing a console for a smart device may include: through a BMC scanning system, determining the smart device in the system; and through the BMC, virtualizing the console for the smart device.

In some embodiments, virtualizing a console for a smart device may include: connecting external management software to a MCTP message communication agent through a network and generating the console for the smart device.

According to the method for smart device management provided by this embodiment, the console is virtualized for the smart device; input and/or output of the console message with external management is performed by means of the Management Component Transfer Protocol (MCTP) out-of-band channel. Therefore, after the console is set for the smart device, the smart device can realize a plurality of functions on the console, and the external management software or users can connect to the console to manage and maintain the smart device by using the message of the console, thus improving the convenience and universality of managing the smart device.

### Embodiment II

In this embodiment provides is a method for smart device management, applied into diagnosing failures of Redundant Arrays of Independent Disks (Raid).

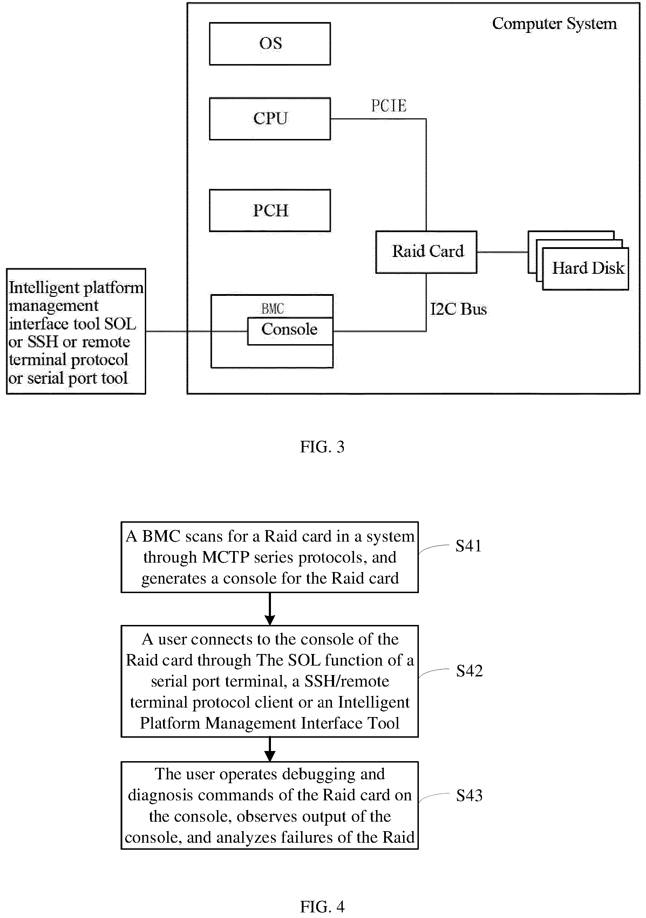

The system architecture is as shown in FIG. 3. A Raid card and a Central Processing Unit (CPU) provide in-band services through a PCIe link, and the Raid card and a BMC are linked through an I2C bus for out-of-band management. If the Operating System (OS) running on the CPU fails to access a logical disk, the failure of the Raid card are diagnosed according to the following steps.

At S41: the BMC scans for the smart device "Raid card" in the system through MCTP series protocols, and generates a console for the Raid card.

At S42: a user connects to the console of the Raid card through a serial port terminal, a SSH/Telnet client or an ipmitool SOL function.

At S43: the user operates debugging and diagnosis commands of the Raid card on the console, observes output of the console, and analyzes the failure of the Raid.

### Embodiment III

In this embodiment provided is a method for smart device management, applied into configuring Ethernet switch.

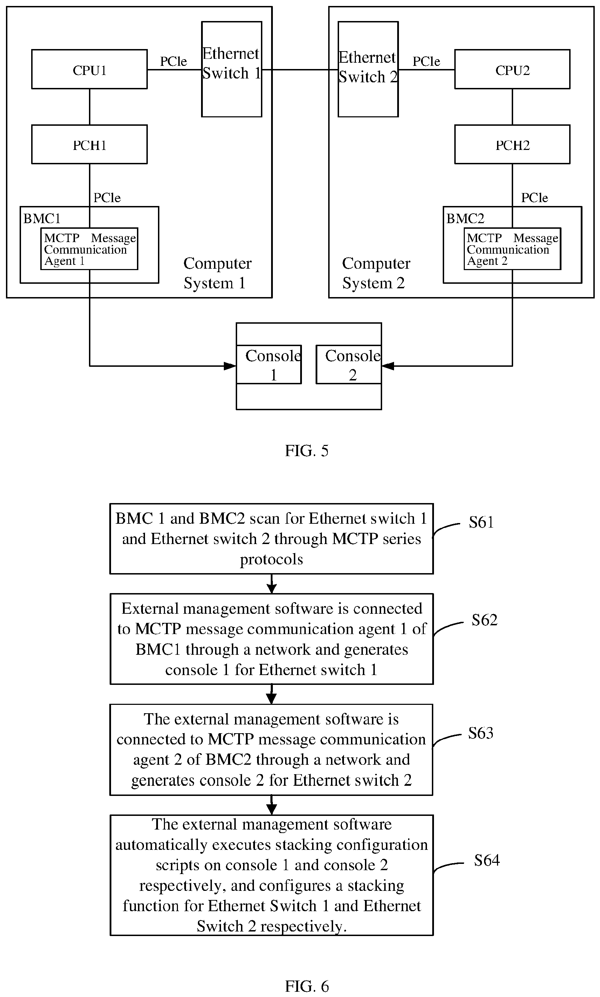

As shown in FIG. 5, the Ethernet switches in computer system 1 and computer system 2 need to be stacked to provide external switching functions, but software running in computer system 1 and computer system 2 does not manage Ethernet switch 1 and Ethernet switch 2. Default ports of Ethernet switch 1 and Ethernet switch 2 are not configured for switch stacking, but can be configured through a MCTP console. The Ethernet switches are configured according to the following steps.

At S61: BMC 1 and BMC2 scan for Ethernet switch 1 and Ethernet switch 2 through MCTP series protocols.

At S62: external management software is connected to MCTP message communication agent 1 of BMC1 through a network and generates console 1 for Ethernet switch 1.

At S63: external management software is connected to MCTP message communication agent 2 of BMC2 through a network and generates console 2 for Ethernet switch 2.

At S64: the external management software automatically executes stacking configuration scripts on console 1 and console 2 respectively, and configures a stacking function for Ethernet Switch 1 and Ethernet Switch 2 respectively.

### Embodiment VI

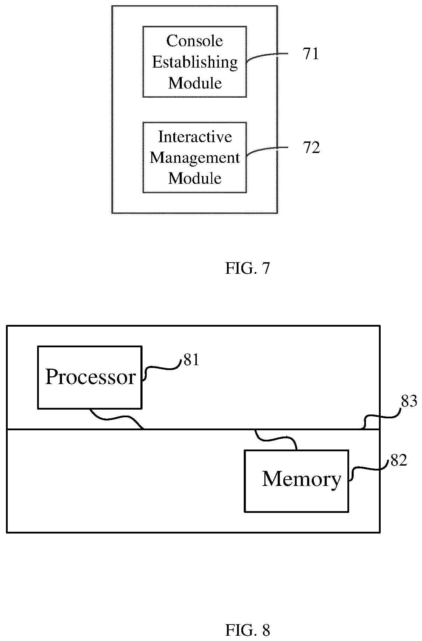

In this embodiment provided is an apparatus for smart device management. With reference to FIG. 7, the apparatus includes a console establishing module 71 configured to virtualize a console for a smart device, and an interactive management module 72 configured to perform, by the smart device, input and/or output of a console message with external management by means of a Management Component Transfer Protocol (MCTP) out-of-band channel.

The smart device can realize a plurality of functions on the console thereof, and the console of the smart device is connected to a BMC or external management software, and commands provided by the console are used to manage and maintain the smart device.

In some embodiments, virtualizing a console for a smart device may include: defining at least one type value in a reserved type field of a Platform-Level Data Model PLDM as a PLDM for the console; or, in a MCTP defined message, defining a console function message body. Optionally, a type value such as 100000b in the reserved type field of the Platform-Level Data Model (PLDM) may be defined as the PLDM for the console, or the console function message body is defined in a MCTP Vendor defined- PCI/MCTP Vendor defined - IANA message.

In some embodiments, performing input and/or output of a console message with external management by means of a MCTP out-of-band channel may include: with a Baseboard Management Controller (BMC) serving as a MCTP message communication agent, performing communication connection between the BMC and the smart device and external management software respectively. The BMC serves as the MCTP message communication agent, allowing the external management software and the smart device to complete the interaction of the console message. As shown in FIG. 2, the BMC can communicate with a plurality of smart devices at the same time, or allow multiple external management software to access at the same time. The external management software performs input and/or output of the console message, and provides the console of the smart device for users. With this solution, the BMC firmware and the external management software can support the debugging, maintenance and management of smart devices with console function from all manufacturers. The upgrading of the BMC firmware and the external management software is no longer required for adding a new smart device, and the users can operate all functions of the smart device through the console provided by the external management software. The decoupling of the BMC and the external management software from the smart device is realized, and it is not necessary to upgrade the BMC firmware and the external management software to add a new smart device or add a new function for the smart device.

In some embodiments, performing input and/or output of a console message with external management by means of a MCTP out-of-band channel may further include: implementing, by the BMC, a console operation interface of the smart device; and accessing the console and/or a Command-Line Interface (CLI) of the smart device through the console operation interface of the BMC to perform input and/or output of the console message. With this solution, special external management software is no longer required, and instead some common terminal tools, such as serial terminal tools, SSH/Telnet client tools and SOL function of ipmitool, are used to debug, maintain and manage the smart devices in the computer system. The BMC firmware upgrade is not necessary in adding a new smart device or functional upgrading of the smart device.

In an embodiment, the console operation interface of the BMC may include at least one selected from a group consisting of a Serial Over Lan SOL, a serial port, a Secure Shell Protocol SSH and a remote terminal protocol Telnet.

Some embodiments may further include: accessing the console and/or the Command-Line Interface CLI of the smart device through the console operation interface of the BMC to perform input and/or output of the console message, and perform at least one of debugging, maintenance and management on the smart device.

In some embodiments, virtualizing a console for a smart device may include: through a BMC scanning system, determining the smart device in the system; and through the BMC, virtualizing the console for the smart device.

In some embodiments, virtualizing a console for a smart device may include: connecting external management software to a MCTP message agent through a network and generating the console for the smart device.

According to the apparatus for smart device management provided by this embodiment, the console is virtualized for the smart device; and input and/or output of the console message is performed with external management by means of the Management Component Transfer Protocol MCTP out-of-band channel. Therefore, after the console is set for the smart device, the smart device can realize a plurality of functions on the console, and the external management software or users can connect to the console to manage and maintain the smart device by using the message of the console, thus improving the convenience and universality of managing the smart device.

### Embodiment V

In this embodiment further provided is a network device, referring to FIG. 8, including a processor 81, a memory 82 and a communication bus 83. The communication bus 83 is configured to implement connection communication between the processor 81 and the memory 82, and the processor 81 is configured to execut one or more computer programs stored in the memory 82 to implement the method for smart device management in the plurality of embodiments mentioned above, and will not be elaborated here.

According to the embodiment further provided is a computer-readable storage medium. The computer-readable storage medium includes volatile or nonvolatile, removable or non-removable medium implemented in any method or art for storing information (such as computer-readable instructions, data structures, computer program modules or other data). The computer-readable storage medium includes, but is not limited to, a Random Access Memory (RAM), a Read-Only Memory (ROM), an Electrically Erasable Programmable Read-Only Memory (EEPROM), a flash memory or other memory technologies, a Compact Disc Read-Only Memory (CD-ROM), a Digital Video Disc (DVD) or other optical disc storage, magnetic boxes, magnetic tapes, magnetic disk storage or other magnetic storage systems or any other medium that can be used to store desired information and can be accessed by computers.

The computer-readable storage medium in this embodiment stores one or more computer programs, and the stored one or more computer programs are executable by a processor to implement at least one step of the method for smart device management in the plurality of embodiments mentioned above.

This embodiment further provides a computer program (or computer software). The computer program may be distributed on a computer-readable medium, and is executable by a computing system to implement at least one step of the method for smart device management in the plurality of embodiments mentioned above.

This embodiment further provides a computer program product, including a computer-readable system, and the computer-readable system stores the computer program as described above. The computer-readable system in this embodiment may include the computer-readable storage medium as described above.

It can be seen that those skilled in the art should understand that all or some steps in the method disclosed above, systems and functional modules/units in the systems may be implemented as software (which may be implemented by computer program codes executable by a computing system), firmware, hardware and appropriate combinations thereof. In hardware implementation, the division between the functional modules/units mentioned in the above description does not necessarily correspond to the division of physical components; for example, one physical component can have multiple functions, or one function or step can be performed cooperatively by multiple physical components. Some physical components or all of the physical components may be implemented as software executed by a processor, such as a central processing unit, a digital signal processor or a microprocessor, or implemented as hardware, or implemented as an integrated circuit, such as an application specific integrated circuit.

Moreover, it is well known to those of ordinary skills in the art that the communication medium typically includes computer-readable instructions, data structures, computer program modules, or other data in a modulated data signal, such as a carrier wave or other transmission mechanism, and may include any information delivery medium. Thus, the present disclosure is not limited to any particular combination of hardware and software.

It can be seen that those skilled in the art should understand that all or some steps in the method disclosed above, systems and functional modules/units in the systems may be implemented as software (which may be implemented by computer program codes executable by a computing system), firmware, hardware and appropriate combinations thereof. In hardware implementation, the division between the functional modules/units mentioned in the above description does not necessarily correspond to the division of physical components; for example, one physical component can have multiple functions, or one function or step can be performed cooperatively by multiple physical components. Some physical components or all of the physical components may be implemented as software executed by a processor, such as a central processing unit, a digital signal processor or a microprocessor, or implemented as hardware, or implemented as an integrated circuit, such as an application specific integrated circuit.

Moreover, it is well known to those of ordinary skills in the art that the communication medium typically includes computer-readable instructions, data structures, computer program modules, or other data in a modulated data signal, such as a carrier wave or other transmission mechanism, and may include any information delivery medium. Thus, the present disclosure is not limited to any particular combination of hardware and software.

## Claims

1. A method for smart device management, comprising:
virtualizing a console for a smart device (S11); and
performing at least one of input and output of a console message with external management by means of a Management Component Transfer Protocol, MCTP, out-of-band channel (S12);
**characterized in that**
performing at least one of input and output of a console message with external management by means of a MCTP out-of-band channel comprises:
performing communication connection between a Baseboard Management Controller, BMC, and the smart device and external management software, wherein the BMC serves as a MCTP message communication agent; and
performing, by the external management software, at least one of input and output of the console message;
wherein virtualizing a console for a smart device (S11) comprises:
determining the smart device in the system, through a BMC scanning system; and
virtualizing the console for the smart device, through the BMC.

2. The method for smart device management of claim 1, wherein virtualizing a console for a smart device comprises:
defining at least one type value in a reserved type field of a Platform-Level Data Model PLDM as a PLDM for the console; or,
defining a console function message body, in a MCTP defined message.

3. The method for smart device management of one of claims 1 to 2, wherein performing at least one of input and output of a console message with external management by means of a MCTP out-of-band channel further comprises:
implementing, by the BMC, a console operation interface of the smart device; and
accessing at least one of the console and a Command-Line Interface CLI of the smart device through the console operation interface of the BMC, to perform at least one of input and output of the console message.

4. The method for smart device management of claim 3, wherein the console operation interface of the BMC comprises at least one selected from a group consisting of a Serial Over Lan SOL, a serial port, a Secure Shell Protocol, SSH, and a remote terminal protocol Telnet.

5. The method for smart device management of claim 3, further comprising: accessing at least one of the console and the CLI of the smart device through the console operation interface of the BMC, to perform at least one of input and output of the console message, and perform at least one of debugging, maintenance and management on the smart device.

6. The method for smart device management of one of claims 1 to 2, wherein virtualizing a console for a smart device comprises:
connecting external management software to a MCTP message communication agent through a network and generating the console for the smart device.

7. An apparatus for smart device management, comprising
a console establishing module (71), configured for virtualizing a console for a smart device; and
an interactive management module (72), configured for performing at least one of input and output of a console message with external management by means of a Management Component Transfer Protocol MCTP out-of-band channel;
**characterized in that**
performing at least one of input and output of a console message with external management by means of a MCTP out-of-band channel comprises:
performing communication connection between a Baseboard Management Controller, BMC, and the smart device and external management software respectively, wherein the BMC serves as a MCTP message communication agent; and
performing, by the external management software, at least one of input and output of the console message;
wherein virtualizing a console for a smart device comprises:
determining the smart device in the system, through a BMC scanning system; and
virtualizing the console for the smart device, through the BMC.

8. The apparatus for smart device management of claim 7 wherein virtualizing a console for a smart device comprises:
defining at least one type value in a reserved type field of a Platform-Level Data Model PLDM as a PLDM for the console; or,
defining a console function message body, in a MCTP defined message.

9. The apparatus for smart device management of one of claims 7 to 8, wherein performing, by the smart device, at least one of input and output of a console message with external management by means of a MCTP out-of-band channel further comprises:
implementing, by the BMC, a console operation interface of the smart device; and
accessing at least one of the console and a Command-Line Interface CLI of the smart device through the console operation interface of the BMC, to perform at least one of input and output of the console message.

10. A network device, comprising a processor (151), a memory (152) and a communication bus (153), wherein,
the communication bus (153) is configured for implementing connection communication between the processor (151) and the memory (152); and
the processor (151) is configured to execute at least one computer program stored in the memory (152) to implement the method for smart device management of one of claims 1 to 6.

11. A computer-readable storage medium storing at least one computer program, wherein the at least one computer program, when executed by at least one processor, causes the at least one processor to implement the method for smart device management of one of claims 1 to 6.

## Patentansprüche

1. Verfahren zur Smart-Device-Verwaltung, umfassend:
Virtualisieren einer Konsole für ein Smart Device (S11); und
Durchführen von zumindest eines von einer Eingabe und Ausgabe einer Konsolennachricht mit externer Verwaltung mittels eines Management Component Transfer Protocol, MCTP, Out-of-Band-Kanals (S12);
**dadurch gekennzeichnet, dass**
Durchführen von zumindest eines von einer Eingabe und Ausgabe einer Konsolennachricht mit externer Verwaltung mittels eines MCTP Out-of-Band-Kanals umfasst:
Durchführen einer Kommunikationsverbindung zwischen einem Baseboard Management Controller, BMC, und dem Smart Device und externer Verwaltungssoftware, wobei der BMC als MCTP-Nachrichtenkommunikationsagent dient; und
Durchführen, durch die externe Verwaltungssoftware, der zumindest eines von einer Eingabe und Ausgabe der Konsolennachricht;
wobei Virtualisieren einer Konsole für ein Smart Device (S11) umfasst:
Bestimmen des Smart Devices im System durch ein BMC-Scanning-System; und
Virtualisieren der Konsole für das Smart Device durch den BMC.

2. Verfahren zur Smart-Device-Verwaltung nach Anspruch 1, wobei Virtualisieren einer Konsole für ein Smart Device umfasst:
Definieren von mindestens einem Typwert in einem reservierten Typ-Feld eines Platform-Level Data Model PLDM als ein PLDM für die Konsole; oder
Definieren eines Konsolenfunktionsnachrichtenkörpers in einer MCTP definierten Nachricht.

3. Verfahren zur Smart-Device-Verwaltung nach einem der Ansprüche 1 bis 2, wobei das Durchführen von zumindest eines von einer Eingabe und Ausgabe einer Konsolennachricht mit externer Verwaltung mittels eines MCTP Out-of-Band-Kanals ferner umfasst:
Implementieren, durch den BMC, einer Konsolenbetriebschnittstelle des Smart Devices; und
Zugreifen auf zumindest eines von der Konsole und eine Befehlszeilenschnittstelle CLI des Smart Devices durch die Konsolenbetriebschnittstelle des BMC, um zumindest eines von einer Eingabe und Ausgabe der Konsolennachricht durchzuführen.

4. Verfahren zur Smart-Device-Verwaltung nach Anspruch 3, wobei die Konsolenbetriebschnittstelle des BMC mindestens eine ausgewählt aus einer Gruppe bestehend aus einem Serial Over LAN SOL, einem seriellen Anschluss, einem Secure Shell Protocol, SSH, und einem Remote-Terminal-Protocol Telnet umfasst.

5. Verfahren zur Smart-Device-Verwaltung nach Anspruch 3, weiterhin umfassend:
Zugreifen auf zumindest eines von der Konsole und der CLI des Smart Devices durch die Konsolenbetriebschnittstelle des BMC, um zumindest eines von einer Eingabe und Ausgabe der Konsolennachricht durchzuführen; und
Durchführen von zumindest eines von Fehlersuche, Wartung und Verwaltung am Smart Device.

6. Verfahren zur Smart-Device-Verwaltung nach einem der Ansprüche 1 bis 2, wobei Virtualisieren einer Konsole für ein Smart Device umfasst:
Verbinden externer Verwaltungssoftware mit einem MCTP-Nachrichtenkommunikationsagenten über ein Netzwerk und Erzeugen der Konsole für das Smart Device.

7. Vorrichtung zur Smart-Device-Verwaltung, umfassend:
ein Konsole-Erstellungsmodul (71), eingerichtet zum Virtualisieren einer Konsole für ein Smart Device; und
ein interaktives Verwaltungsmodul (72), eingerichtet zum Durchführen von zumindest eines von einer Eingabe und Ausgabe einer Konsolennachricht mit externer Verwaltung mittels eines Management Component Transfer Protocol, MCTP, Out-of-Band-Kanals;
**dadurch gekennzeichnet, dass**
Durchführen von zumindest eines von einer Eingabe und Ausgabe einer Konsolennachricht mit externer Verwaltung mittels eines MCTP Out-of-Band-Kanals umfasst:
Durchführen einer Kommunikationsverbindung zwischen einem Baseboard Management Controller, BMC, und dem Smart Device und externer Verwaltungssoftware jeweils, wobei der BMC als MCTP-Nachrichtenkommunikationsagent dient; und
Durchführen, durch die externe Verwaltungssoftware, der zumindest eines von einer Eingabe und Ausgabe der Konsolennachricht;
wobei Virtualisieren einer Konsole für ein Smart Device umfasst:
Bestimmen des Smart Devices im System durch ein BMC-Scanning-System; und
Virtualisieren der Konsole für das Smart Device durch den BMC.

8. Vorrichtung zur Smart-Device-Verwaltung nach Anspruch 7, wobei Virtualisieren einer Konsole für ein Smart Device umfasst:
Definieren von mindestens einem Typwert in einem reservierten Typ-Feld eines Platform-Level Data Model PLDM als PLDM für die Konsole; oder
Definieren eines Konsolenfunktionsnachrichtenkörpers in einer MCTP definierten Nachricht.

9. Vorrichtung zur Smart-Device-Verwaltung nach einem der Ansprüche 7 bis 8, wobei Durchführen, durch das Smart Device, von zumindest eines von einer Eingabe und Ausgabe einer Konsolennachricht mit externer Verwaltung mittels eines MCTP Out-of-Band-Kanals ferner umfasst:
Implementieren, durch den BMC, einer Konsolenbetriebschnittstelle des Smart Devices; und
Zugreifen auf zumindest eines von der Konsole und eine Befehlszeilenschnittstelle CLI des Smart Devices durch die Konsolenbetriebschnittstelle des BMC, um zumindest eines von einer Eingabe und Ausgabe der Konsolennachricht durchzuführen.

10. Netzwerkgerät, umfassend einen Prozessor (151), einen Speicher (152) und einen Kommunikationsbus (153), wobei
der Kommunikationsbus (153) zum Implementieren eine Verbindungs-Kommunikation zwischen dem Prozessor (151) und dem Speicher (152) eingerichtet ist; und
der Prozessor (151) dazu eingerichtet ist, mindestens ein im Speicher (152) gespeichertes Computerprogramm auszuführen, um das Verfahren zur Smart-Device-Verwaltung nach einem der Ansprüche 1 bis 6 zu implementieren.

11. Computerlesbares Speichergerät, auf dem mindestens ein Computerprogramm gespeichert ist, wobei das mindestens eine Computerprogramm, bei Ausführung durch mindestens einen Prozessor, den mindestens einen Prozessor veranlasst, das Verfahren zur Smart-Device-Verwaltung nach einem der Ansprüche 1 bis 6 zu implementieren.

## Revendications

1. Procédé pour gestion de dispositif intelligent, comprenant :
la virtualisation d'une console pour un dispositif intelligent (S11) ; et
la réalisation d'au moins une d'une entrée et d'une sortie d'un message de console avec gestion externe au moyen d'un canal hors bande MCTP, « Management Component Transfer Protocol », (S12) ;
**caractérisé en ce que**
la réalisation d'au moins une d'une entrée et d'une sortie d'un message de console avec gestion externe au moyen d'un canal hors bande MCTP comprend :
la réalisation d'une connexion de communication entre un BMC, « Baseboard Management Controller », et le dispositif intelligent et un logiciel de gestion externe, dans lequel le BMC sert d'agent de communication de message MCTP ; et
la réalisation, par le logiciel de gestion externe, d'au moins une d'une entrée et d'une sortie du message de console ;
dans lequel la virtualisation d'une console pour un dispositif intelligent (S11) comprend :
la détermination du dispositif intelligent dans le système, par le biais d'un système de balayage BMC ; et
la virtualisation de la console pour le dispositif intelligent, par le biais du BMC.

2. Procédé pour gestion de dispositif intelligent de la revendication 1, dans lequel la virtualisation d'une console pour un dispositif intelligent comprend :
la définition d'au moins une valeur type dans un champ type réservé d'un PLDM, « Platform-Level Data Model », en tant que PLDM pour la console ; ou,
la définition d'un corps de message de fonction de console, dans un message défini par MCTP.

3. Procédé pour gestion de dispositif intelligent d'une des revendications 1 et 2, dans lequel la réalisation d'au moins une d'une entrée et d'une sortie d'un message de console avec gestion externe au moyen d'un canal hors bande MCTP comprend en outre :
la mise en œuvre, par le BMC, d'une interface de fonctionnement de console du dispositif intelligent ; et
l'accès à au moins une de la console et d'une CLI, « Command-Line Interface », du dispositif intelligent par le biais de l'interface de fonctionnement de console du BMC, pour réaliser au moins une d'une entrée et d'une sortie du message de console.

4. Procédé pour gestion de dispositif intelligent de la revendication 3, dans lequel l'interface de fonctionnement de console du BMC comprend au moins un sélectionné parmi un groupe constitué d'un SOL, « Serial Over Lan », un port série, un SSH « Secure Shell Protocol », et un protocole de terminal à distance Telnet.

5. Procédé pour gestion de dispositif intelligent de la revendication 3, comprenant en outre : l'accès à au moins une de la console et de la CLI du dispositif intelligent par le biais de l'interface de fonctionnement de console du BMC, pour réaliser au moins une d'une entrée et d'une sortie du message de console, et la réalisation d'au moins un parmi le débogage, la maintenance, et la gestion sur le dispositif intelligent.

6. Procédé pour gestion de dispositif intelligent d'une des revendications 1 et 2, dans lequel la virtualisation d'une console pour un dispositif intelligent comprend :
la connexion d'un logiciel de gestion externe à un agent de communication de message MCTP par le biais d'un réseau et la génération de la console pour le dispositif intelligent.

7. Appareil pour gestion de dispositif intelligent, comprenant
un module d'établissement de console (71), configuré pour la virtualisation d'une console pour un dispositif intelligent ; et
un module de gestion interactif (72), configuré pour la réalisation d'au moins une d'une entrée et d'une sortie d'un message de console avec gestion externe au moyen d'un canal hors bande MCTP, « Management Component Transfer Protocol » ;
**caractérisé en ce que**
la réalisation d'au moins une d'une entrée et d'une sortie d'un message de console avec gestion externe au moyen d'un canal hors bande MCTP comprend :
la réalisation d'une connexion de communication entre un BMC, « Baseboard Management Controller », et le dispositif intelligent et logiciel de gestion externe respectivement, dans lequel le BMC sert d'agent de communication de message MCTP ; et
la réalisation, par le logiciel de gestion externe, d'au moins une d'une entrée et d'une sortie du message de console ;
dans lequel la virtualisation d'une console pour un dispositif intelligent comprend :
la détermination du dispositif intelligent dans le système, par le biais d'un système de balayage BMC ; et
la virtualisation de la console pour le dispositif intelligent, par le biais du BMC.

8. Appareil pour gestion de dispositif intelligent de la revendication 7, dans lequel la virtualisation d'une console pour un dispositif intelligent comprend :
la définition d'au moins une valeur type dans un champ type réservé d'un PLDM, « Platform-Level Data Model », en tant que PLDM pour la console ; ou,
la définition d'un corps de message de fonction de console, dans un message défini par MCTP.

9. Appareil pour gestion de dispositif intelligent d'une des revendications 7 et 8, dans lequel la réalisation, par le dispositif intelligent, d'au moins une d'une entrée et d'une sortie d'un message de console avec gestion externe au moyen d'un canal hors bande MCTP comprend en outre :
la mise en œuvre, par le BMC, d'une interface de fonctionnement de console du dispositif intelligent ; et
l'accès à au moins une de la console et d'une CLI, « Command-Line Interface », du dispositif intelligent par le biais de l'interface de fonctionnement de console du BMC, pour réaliser au moins une d'une entrée et d'une sortie du message de console.

10. Dispositif de réseau, comprenant un processeur (151), une mémoire (152) et un bus de communication (153), dans lequel,
le bus de communication (153) est configuré pour mettre en œuvre une communication de connexion entre le processeur (151) et la mémoire (152) ; et
le processeur (151) est configuré pour exécuter au moins un programme d'ordinateur stocké dans la mémoire (152) pour mettre en œuvre le procédé pour gestion de dispositif intelligent d'une des revendications 1 à **6.**

11. Support de stockage lisible par ordinateur stockant au moins un programme d'ordinateur, dans lequel l'au moins un programme d'ordinateur, lorsqu'il est exécuté par au moins un processeur, amène l'au moins un processeur à mettre en œuvre le procédé pour gestion de dispositif intelligent d'une des revendications 1 à 6.
